Europäisches Patentamt

European Patent Office

Office européen des brevets

(11) Veröffentlichungsnummer: **0 174 291**
**B1**

(12) **EUROPÄISCHE PATENTSCHRIFT**

(45) Veröffentlichungstag der Patentschrift:
03.05.89

(51) Int. Cl.⁴: **C 22 B 5/14**

(21) Anmeldenummer: **85890162.2**

(22) Anmeldetag: **23.07.85**

(54) **Verfahren zum Erschmelzen von Metallen aus oxidischen und/oder feinkörnigen sulfidischen Nichteisenmetallerzen bzw. -konzentraten, sowie Einrichtung zur Durchführung dieses Verfahrens.**

(30) Priorität: 16.08.84 AT 2639/84
16.08.84 AT 2640/84

(43) Veröffentlichungstag der Anmeldung:
12.03.86 Patentblatt 86/11

(45) Bekanntmachung des Hinweises auf die Patenterteilung:
03.05.89 Patentblatt 89/18

(84) Benannte Vertragsstaaten:
AT BE CH DE FR GB IT LI LU NL SE

(56) Entgegenhaltungen:
AT-B- 376 242
FR-A- 2 356 895
US-A- 3 892 560
US-A- 3 948 639
US-A- 4 070 181
US-A- 4 087 274

(73) Patentinhaber: **VOEST-ALPINE INDUSTRIEANLAGENBAU GESELLSCHAFT M.B.H.,**
**Turmstrasse 44, A-4020 Linz (AT)**

(72) Erfinder: **Sulzbacher, Horst, Dipl.-Ing., Dirnböckweg 5,**
**A-8700 Leoben (AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a, A-1014 Wien (AT)**

## Beschreibung

Die Erfindung bezieht sich auf ein Verfahren zum Erschmelzen von Metallen aus oxidischen und/oder feinkörnigen sulfidischen Nichteisenmetallerzen bzw. -konzentraten, insbesondere sulfidischen Buntmetallerzen bzw. -konzentraten, bei welchem sulfidische Erze unter Luft- bzw. Sauerstoffzufuhr oxidiert werden, sowie auf eine Vorrichtung zur Durchführung dieses Verfahrens.

Derartige oxidische Nichteisenmetallerze können in körniger und stückiger Form anfallen, werden aber in der Regel aus sulfidischen Erzen durch oxidierendes Rösten erzeugt. Im Falle der Röstprozesse entstehen grosse Mengen an Schwefeldioxid, welche einer gesonderten Aufarbeitung unterworfen werden müssen, beispielsweise zu Schwefelsäure verarbeitet werden können. Die pyrometallurgische Behandlung stückiger oxidischer Ausgangsmaterialien wurde bisher in der Regel in Niederschachtöfen vorgenommen, in welchen Blister- bzw. Schwarzkupfer erzeugt wurde. Das bei reduzierenden Bedingungen in einem Niederschachtofen gebildete Gas besteht in der Regel aus Stickstoff, Kohlendioxid und verschiedenen Schwefelverbindungen wie $SO_2$, $H_2S$, COS und $CS_2$. Der CO-Gehalt derartiger Abgase ist in den meisten Fällen relativ niedrig, so dass ein Abgas mit geringem Heizwert erzielt wird. Oxidische Buntmetallerze sind in der Regel wesentlich leichter zu reduzieren als oxidische Eisenerze.

In der US-PS 3 948 639 wird ein Verfahren und eine Vorrichtung zum Erschmelzen von sulfidischen Erzen bzw. Konzentraten beschrieben, in welchen die aus dem Schmelzofen austretenden Gase zusammen mit dem sulfidischen Erz oder Konzentrat einer Vorbehandlungszone zugeführt werden, von wo die abgekühlten Gase zur Gewinnung von Schwefel und dem vorbehandelten sulfidischen Erz oder Konzentrat dem oberen Ende der Reaktionszone des Schmelzofens zugeführt werden.

Aus der US-PS 4 087 274 ist eine Einrichtung zum Reduzieren von Erzen bekanntgeworden, bei welcher vorreduziertes Material in ein feste Kohle enthaltendes Schmelzbad gelangt, in welchem die eigentliche Reduktion stattfindet.

Die FR-PS 2 128 053 beschreibt ein Verfahren und eine Vorrichtung zur Gewinnung von Metallen, insbesondere Nickel, aus Erzen, in welchen die Seigerung des Metalles in einem Wirbelbett durch Verbrennung mit Luft und einem wasserstoffarmen Brennstoff, wie Koks, erfolgt.

Für die Reduktion von Eisenerzen unter Verwendung von billigen Brennstoffen wurde bereits vorgeschlagen, Eisenerze nach einer Vorreduktion in Form von Eisenschwamm unmittelbar einem Einschmelzvergaser aufzugeben, in welchem eine Kohlewirbelschicht mit relativ minderwertiger Einsatzkohle gebildet wird, um Restoxide abzubauen und die nötige Schmelzwärme aufzubringen.

In der Kupfermetallurgie wurden bereits eine Reihe von Verfahren vorgeschlagen, bei welchen Sulfidkonzentrate unmittelbar in einem Schmelzbrenner unter hoher Energieabgabe oxidiert wurde, wobei dieser Feststoffbrenner dem gleichzeitigen Rösten und Schmelzen der Konzentrate zu sogenanntem Stein oder Matte diente. Ein derartiges Verfahren ist beispielsweise der AT-PS 376 242 zu entnehmen, bei welchem in nachfolgenden Absetzherden der Stein von der Schlacke getrennt wurde, wobei als Nachteil dieses Verfahrens die Tatsache anzuführen ist, dass als gasförmiges Verbrennungsprodukt $SO_2$ anfällt und dieses $SO_2$ beispielsweise in einer Schwefelsäureerzeugungsanlage verwertet werden muss. Ausserdem entstehen bei diesen Verfahren hohe Metallverluste in der Schlacke, weil durch die im Schmelzgefäss vorherrschenden oxidierenden Bedingungen sich ein hoher Anteil als $CU_2O$ in der Schlacke löst. Andere Verfahren zur Aufarbeitung von Nichteisenmetallerzen setzen bereits oxidische Erze voraus und es ist in diesem Zusammenhang in erster Linie der Niederschachtofen als gängigste Schmelzanlage mit reduzierenden Prozessbedingungen zu nennen. Es wurde auch bereits vorgeschlagen, an Schwebeschmelzverfahren reduzierende Prozessstufen anzuschliessen, wobei allerdings eine komplizierte Abgasführung zur gesonderten Abführung der oxidierenden Zyklonabgase und der reduzierenden Abgase aus nachfolgenden Schmelzkammern oder Öfen vorgesehen ist.

Die Erfindung zielt nun darauf ab, diese bekannte Technologie dahingehend weiterzubilden, dass sie besonders vorteilhaft auch für Nichteisenmetallerze, insbesondere Buntmetallerze, eingesetzt werden kann.

Weiters zielt die Erfindung darauf ab, ausgehend von sulfidischen Erzen in einer energiesparenden Weise unmittelbar elementaren Schwefel und hochwertige Metallschmelze herzustellen und bei dieser Verfahrensführung die Verluste in der Schlacke zu minimieren.

Zur Lösung dieser Aufgabe besteht die Erfindung im wesentlichen darin, dass die Erze bzw. Konzentrate in stückiger und/oder körniger Form in einem Einschmelzvergaser in eine Kohlewirbelschicht eingebracht und dort geschmolzen werden, und dass bei Einsatz von sulfidischen Erzen diese vor dem Einbringen in die Kohlewirbelschicht des Einschmelzvergasers einem Schmelzbrenner zugeführt werden, wobei der Flammstrahl des Schmelzbrenners auf die Kohlewirbelschicht gerichtet wird und die Schmelzprodukte unterhalb des Kohlebettes abgezogen werden. Mit derartigen Ausgangsmaterialien lässt sich eine dem jeweiligen Erz und unterschiedlichen Konzentrationen und Zusammensetzungen leicht anpassbare Verfahrenssteuerung verwirklichen, wobei vorzugsweise die Korngrösse der aufzubringenden Erze bzw. Konzentrate zwischen 1 mm und 50 mm, vorzugsweise 3–30 mm, gewählt wird. Gegenüber der bekannten Verfahrensweise bei Eisenerzen kann somit hier unmittelbar das oxidische Material in den Einschmelzvergaser eingebracht werden, und aufgrund der Kohlewirbelschicht lässt sich durch Steuerung der Luft- bzw. Sauerstoff- und Kohlezufuhr rasch eine Anpassung an das jeweilige zu reduzierende Erz erzielen. Die Verwendung eines Einschmelzvergasers im Rahmen des erfindungsgemässen Verfahrens erlaubt es auch, vor den Einschmelzvergaser einen Reduktionsschacht oder ein anderes Reduktionsaggregat (Drehrohrofen) zu schalten, welchem unmittelbar ein Teil der Abgase des Einschmelzvergasers zugeführt werden kann. Zum Unterschied von den bekannten Einrichtungen entsteht im Einschmelzvergaser ein stark reduzierendes Gas, welches einen hohen Heizwert aufweist und daher in hohem Masse für eine Vorreduktion geeignet ist. Darüber hinaus hat der Einschmelzvergaser aufgrund der steuerbaren Bedingungen seiner Ofenatmosphäre die Möglichkeiten, Schwefeldioxid zu elementarem Schwefel zu reduzieren und auf die Art und Weise eine Gewinnung von Schwefel durch Kondensieren aus den Abgasen zu ermöglichen.

Im Falle des Einsatzes von sulfidischen Erzen oder Konzentraten wird bei dem erfindungsgemässen Verfahren ein Schmelzbrenner vorgeschaltet und der Flammstrahl aus dem Suspensionsbrenner auf die Kohlewirbelschicht gerichtet, wobei die Schmelzprodukte unterhalb des Kohlebettes abgezogen werden. Die im Schmelzbrenner entstehenden flüssigen bzw. teigigen Produkte fallen in ein Kohlefliessbett, wobei der Schmelzbrenner mit feinkörnigem sulfidischem Erzkonzentrat, Schlackenbildnern und Kreislaufmaterial und vorgewärmter Luft, Sauerstoff-Luftgemisch oder reinem Sauerstoff betrieben werden kann. Üblicherweise werden Temperaturen für die Verbrennungsluft in der Grössenordnung von 300 °C bis 1000 °C gewählt, wobei die sulfidischen Erzkonzentrate zumindest teilweise oxidiert werden.

In vorteilhafter Weise wird die Korngrösse der Kohle in der Kohlewirbelschicht zwischen 1 und 50 mm, vorzugsweise 1–25 mm, gewählt.

In vorteilhafter Weise werden die oxidischen Erze vor der Aufgabe in die Kohlewirbelschicht entweder auf Temperaturen zwischen 500 °C und 900 °C vorgewärmt oder erforderlichenfalls bei Temperaturen zwischen 700 °C und 900 °C geröstet. Ein Rösten ist insbesondere erforderlich, wenn es sich bei den Ausgangsmaterialien um Materialien mit einem höheren sulfidischen Anteil handelt. Bei feinkörnigem Erz muss jedoch beim Rösten eine Agglomeration erfolgen.

Die im Wirbelbett erzeugten heissen Gase und die Kohlepartikel treten beim Durchgang der stückigen Erze durch das Wirbelbett mit den Metalloxiden in Reaktion, wobei das Metalloxid sich mit Kohlenstoff bzw. Kohlenmonoxid zu Metall, Kohlemonoxid bzw. Kohlendioxid umsetzt. Aufgrund der im Wirbelbett erzielbaren hohen Temperaturen lässt sich das Gleichgewicht im Sinne der Gleichung $CO_2 + C = 2CO$ in Richtung der Erzeugung von Kohlemonoxid verschieben, wodurch ein reduzierendes Abgas erzielt wird. In vorteilhafter Weise wird hiebei die Kohlewirbelschicht auf Temperaturen zwischen 1200 °C und 1800 °C, vorzugsweise zwischen 1300 °C und 1700 °C, gehalten, wodurch ein sicheres Niederschmelzen der meisten interessierenden Buntmetalle gewährleistet ist. Das Verfahren ist hiebei in erster Linie für die Aufarbeitung von Kupfer-, Blei-, Zink-, Nickel-, Kobalt- und Zinnerzen sowie deren komplexen Verbindungen geeignet, wobei ein Teil der niedrig siedenden bzw. niedrig flüchtigen Elemente über die Gasphase ausgetragen werden kann.

Zur Verbesserung der Energiebilanz wird in vorteilhafter Weise ein Teil des aus dem Einschmelzvergaser abgezogenen Reduktionsgases zur Vorreduktion und Aufwärmung der Rohstoffe herangezogen. Die Regelbarkeit der Temperatur des Kohlewirbelbettes ergibt sich hiebei insbesondere durch geregeltes Einblasen von Heissluft und/oder Sauerstoff in der Düsenebene des Einschmelzvergasers.

Die Reaktionsgase des Einschmelzvergasers, welche in der Regel noch einen hohen Heizwert aufweisen, können in einem Heizzyklon gereinigt werden.

Für den Fall, dass das oxidische Ausgangsmaterial durch einen oxidierenden Röstprozess aus ursprünglich sulfidischen Erzen gewonnen wurde, erlaubt die erfindungsgemässe Verfahrensführung das Einbringen der Röstgase gemeinsam mit den oxidischen Erzen in den Einschmelzvergaser, wobei die entstandenen $SO_2$-haltigen Gase in Kontakt mit der reduzierenden Atmosphäre und dem Kohlenstoff des Einschmelzvergasers zu elementarem Schwefel reduziert werden. Analog ist es aber auch möglich, die Röstgase den Reaktionsabgasen des Einschmelzvergasers beizumengen, da aufgrund der hohen Temperatur der Reaktionsabgase auch hier noch die gewünschte Umsetzung zu elementarem Schwefel gegeben ist.

Das Kohlefliessbett im Einschmelzvergaser wird in bevorzugter Weise mit Kohle in einem Korngrössenbereich von 1–20 mm kontinuierlich beschickt. Die Kohle wird hiebei durch die im Vergaser herrschenden hohen Temperaturen schlagartig getrocknet und entgast, wobei sie verkokt. Die Entgasungsprodukte setzen sich im Kohlenstoff zu Kohlenmonoxid und Wasserstoffgas um, welches sich mit dem aus dem Wirbelbett austretenden Kohlenmonoxidgas vermischt und aus dem Vergaser abgezogen wird. Der Grossteil der verkokten Kohleteilchen bildet die Wirbelschicht aus. Eine geringe Menge Feinstkoks wird mit dem Gas ausgetragen. Im unteren Bereich des Einschmelzvergasers und über Düsen wird das Verbrennungsmittel in die Wirbelschicht eingeblasen. In der Düsenebene des Wirbelbettes herrscht in der Regel eine höhere Temperatur als im übrigen Wirbelbett, wobei der glühende Feinkoks aus dem Wirbelbett mit dem Sauerstoff zu $CO_2$ verbrennt. Die Flammentemperaturen können deutlich über 2000 °C liegen. Die Wirbelschicht wird neben dem Stickstoff aus dem Heisswind von Kohlenmonoxidgas durchströmt, welches durch die Umsetzung des von den Düsen entstehenden $CO_2$ mit C entsteht. Dabei gibt das Gas einen Teil seiner Wärme an die Kokspartikel ab und heizt dadurch das Wirbelbett auf. In der Regel wird mit einer Wirbelbetthöhe von etwa 2–4 m gearbeitet, wobei das Wirbelbett eine heftig bewegte Schicht aus glühendem Feinkoks darstellt, in welcher Temperaturen zwischen 1400 °C bis 1700 °C herrschen. Die oxidischen Nichteisenmetallerze werden unmittelbar in den Kopf eines Einschmelzvergasers chargiert und sinken durch das Wirbelbett durch, wobei sie reduziert und aufgeschmolzen werden. An der Grenzfläche zwischen Koksbett und Schlackenbad kommt es zu einer Homogenisierung der flüssigen und teigigen Komponenten, wobei aus Erz, Kohlenasche und gegebenenfalls Zuschlägen eine Schlacke entsteht. Die entstehenden Metalltropfen nehmen beim Durchgang durch die Schlacke noch weitere Wärme auf. Oxidische Erze können sowohl durch den heissen Koks als auch durch das aufsteigende Gas unter Kohlenmonoxid- bzw. Kohlendioxidbildung reduziert werden. Eine derartige Reduktion ist allerdings nur bei den leichter reduzierbaren Erzen, insbesondere bestimmten Nichteisenmetallerzen und Buntmetallerzen möglich, da bei Eisenerz der Energieaufwand für eine derartige Reduktion zu hoch wäre.

Das Gas, welches an der Oberfläche der Wirbelschicht austritt, liefert zum einen die Wärme für die Verkokungsarbeit des in die Wirbelschicht einzubringenden Kohlenstoffträgers. Bei der Entgasung kommt es zu einer Erwärmung der Kohle sowie zu einer Verdampfung des Wassers und Austreibung der flüchtigen Bestandteile sowie deren Umsetzung zu Kohlenmonoxid und Wasserstoff. Das hochwertige Heizgas verlässt zusammen mit den Reaktionsgasen den Einschmelzvergaser. Üblicherweise liegt die Gaszusammensetzung je nach Anteil der flüchtigen Kohlenbestandteile zwischen 50% und 90% CO und 10% bis 40% Wasserstoff. Der $CO_2$-Gehalt ist eine Funktion der Temperatur, wobei bei steigender Gastemperatur der $CO_2$-Gehalt sinkt.

Im besonderen Fall der Kupfererze ergibt sich im Vergleich zur Eisenpyrometallurgie der Vorteil dass die Verhüttung geringere Schmelztemperaturen und einen geringeren Energieaufwand erfordert.

Die beispielsweise im Bezug auf Kupfer ablaufenden Umsetzungen lassen sich wie folgt in Gleichungen kleiden: $Cu_2FeS_3 \rightleftharpoons FeS + Cu_2S + S$ (endothermer Vorgang). $S + O_2 \rightleftharpoons SO_2$ (exothermer Prozess), $FeS + 3/2\ O_2 = FeO + SO_2$ (exotherm). $Cu_2S + 3/2\ O_2 + Cu_2O + SO_2$ (exotherm).

Die aufgrund des Überwiegens an exothermen Prozessen entstehende Wärme reicht aus, die feinkörnigen Erzkonzentrate aufzuschmelzen. Die Prozesstemperatur liegt typischerweise über 1100 °C. Nach dieser im Schmelzbrenner ablaufenden Reaktion werden die erhaltenen Reaktionsprodukte in das Kohlewirbelbett geschleudert. Dabei ist der Strahl unmittelbar auf die Oberfläche der Kohlewirbelschicht gerichtet. Diese unmittelbare Ankoppelung des Schmelzbrennerprozesses an ein reduzierendes Verfahren in der Kohlewirbelschicht bringt auch energetisch bedeutende Vorteile mit sich. Bei den im Schmelzbrenner entstehenden schmelzflüssigen Produkten handelt es sich im wesentlichen um Metallsulfide, Oxide und Schlackenprodukte, die in Tröpfchenform in ein durch Einblasen von Sauerstoff-Heissluft- oder Heissluftsauerstoffgemischen gewirbeltes Feinkohlebett eingebracht werden. Im Kohlewirbelbett entsteht durch Verbrennung des Sauerstoffs mit dem Kohlenstoff zuerst $CO_2$ und in weiterer Folge Kohlenmonoxid, welches blasenbildend durch das Feinkohlebett nach oben steigt und eine Durchwirbelung des Bettes begünstigt. Die Höhe des Kohlewirbelbettes selbst wird durch Zugabe von dosierten Kohlemengen konstant gehalten. Die Schmelzprodukte und die dabei entstehenden $SO_2$-hältigen Gase aus dem Schmelzbrenner treffen unmittelbar auf die Wirbelschichtoberfläche auf. Dabei sickert die Schmelze durch das Wirbelbett hindurch und sammelt sich am Boden des Schmelzgefässes, wobei ein Schmelzsumpf aus Metall und/oder Stein und Schlacke entsteht. Die $SO_2$-haltigen Gase reagieren entweder mit dem Kohlenstoff des Wirbelbettes oder mit dem aus dem Wirbelbett austretenden Kohlenmonoxid bzw. im Gasstrom mitgerissenen feinen Kohlenstoffteilchen nach der Gleichung $SO_2 + 2C = S + 2CO$ bzw. $SO_2 + 2CO = S + 2CO_2$. Es wird somit der Schwefel aus dem Schwefeldioxid zu elementarem Schwefel reduziert und kann aus der Gasphase durch Kondensieren abgetrennt werden.

Die aus dem Wirbelbett austretenden Gase setzen sich zusammen mit jenen aus dem Schmelzbrenner in erster Linie zu Schwefeldampf, Kohlenmonoxid, Wasserstoff und Stickstoff um. Die fühlbare Wärme des Abgases kann zur Vorwärmung des sulfidischen Konzentrates ausgenützt werden, wobei vorzugsweise die heissen Reaktionsgase oberhalb der Kohlewirbelschicht abgezogen und zur Vorwärmung der dem Schmelzbrenner zuzuführenden Ausgangsmaterialien herangezogen werden.

Um eine intensive Reaktion sicherzustellen, wird das erfindungsgemässe Verfahren vorzugsweise so durchgeführt, dass die Kohlewirbelschicht in einem Einschmelzvergaser ausgebildet wird und durch Heissluft und/oder Sauerstoff und Kohlepartikel einer Korngrösse von 1–50 mm, vorzugsweise 3–20 mm, aufrechterhalten wird. In besonders bevorzugter Weise werden mit den Kohlenstoffträgern vorgewärmte sauerstoffhaltige Gase eingeblasen.

Um die Umsetzung in der Gasphase quantitativ in Richtung elementaren Schwefel sicherzustellen, wird in besonders vorteilhafter Weise die Temperatur des Kohlewirbelbettes durch Einstellung der Heisslufttemperatur und die Reduktionsgasmenge über die Heissluftmenge gesteuert. Es wird vorzugsweise die im Einschmelzvergaser gebildete Reduktionsgasmenge so geregelt, dass eine vollständige Reduktion von $SO_2$ zu S sichergestellt ist und dass der gesamte Schwefel aus der Gasphase, durch Kondensieren, abgetrennt werden kann.

Das erfindungsgemässe Verfahren zeichnet sich durch eine exakte Steuerbarkeit wesentlicher Parameter aus und es lassen sich z.B. die Kupferverluste im Vergleich zu bekannten Suspensionsschmelzverfahren wesentlich herabsetzen. Insbesondere lässt sich durch die erfindungsgemässe Verfahrensführung bei Temperaturen des Kohlewirbelbettes zwischen 1200 und 1600 °C, vorzugsweise etwa 1400 °C, z.B. Cu-Stein bzw. Matte mit etwa 80% Kupfer ohne Eisensulfid in der Schmelze oder sogar Blisterkupfer, in welchem auch kaum mehr Kupfersulfid enthalten ist, herstellen. Analog ist die erfindungsgemässe Verfahrensweise auch für die Aufarbeitung weiterer sulfidischer Erze und deren komplexer Verbindungen, wie beispielsweise Nickel, Blei, Zink und Kobaltkonzentrate geeignet.

Die zur Durchführung des erfindungsgemässen Verfahrens vorgeschlagene Einrichtung umfasst einen Einschmelzvergaser, einen Schmelzbrenner sowie eine Aufgabeeinrichtung und eine Abstichöffnung und ist im wesentlichen dadurch gekennzeichnet, dass der Schmelzbrenner unmittelbar an den Kopf eines Einschmelzvergasers angeschlossen ist und dass an den Einschmelzvergaser Leitungen für die Zugabe von Kohlenstoffpartikeln und sauerstoffhaltigen Gasen für das Fliessbett sowie für den Abzug von Reaktionsgasen angeschlossen sind, dass der Schmelzbrenner im unteren Teil eines gasdichten Gehäuses angeordnet ist, an welches die Leitung für den Abzug der Reaktionsgase aus dem Einschmelzvergaser, und eine zu einer Gasreinigungseinrichtung führende Leitung angeschlossen ist, und dass an die Gasreinigungsvorrichtung eine Leitung zum Abziehen von Feststoffen angeschlossen ist, welche mit dem Schmelzbrenner verbunden ist. In vorteilhafter Weise können diese Reaktionsgase für eine Vorwärmung des zu oxidierenden Ausgangsmaterials eingesetzt werden, wofür das über dem Schmelzbrenner angeordnete gasdichte Gefäss vorgesehen ist, welches die Form eines Fliehkraftstaubabscheiders hat. In bevorzugter Weise ist die Ausbildung so getroffen, dass die Leitung für den Abzug der Reaktionsgase aus dem Einschmelzvergaser, mit im wesentlichen tangentialer Mündung zum Inneren des Gehäuses angeordnet ist. Die heissen Reaktionsgase werden auf diese Weise tangential in den Behälter eingeführt und bilden einen wirbelartigen Gasstrom. In diesen Gasstrom werden die Erzpartikel zugegeben und in Kontakt mit dem heissen Gas erwärmt. Durch die Fliehkraft werden sie an die Wand des Behälters geschleudert und sammeln sich am Boden des Zyklons, von wo sie in dem darunterliegenden Schmelzbrenner über eine Dosiereinrichtung abgezogen werden. Das Reaktionsgas kann nach der Vorwärmung in einfacher Weise über ein Tauchrohr aus dem Gefäss abgezogen werden und geht in eine Trockengasreinigung. Die Vorwärmung wird in jedem Falle nur soweit vorgenommen, dass das Reaktionsgas nicht so weitgehend abkühlt, dass Schwefel kondensieren kann. Anschliessend an die Gasreinigung wird der im Abgas enthaltene Schwefel durch Kondensieren abgetrennt, wofür dieses gekühlt werden muss.

Die Schmelzprodukte (Metall, Stein und Schlacke) können entweder kontinuierlich oder in Abstichintervallen aus dem Schmelzaggregat entnommen werden.

Im Rahmen des erfindungsgemässen Verfahrens lassen sich in einfacher Weise unmittelbar Ferrolegierungen mit geringem C-Gehalt erschmelzen, wobei lediglich Eisenerze zusätzlich aufgegeben werden. Für Ferrochrom kann hiebei beispielsweise eine Chrom-Erzzusammensetzung

| 46,40% | $Cr_2O_3$ |
|---|---|
| 20,52% | $FeO$ |
| 0,26% | $Fe_2O_3$ |
| 0,30% | $CaO$ |
| 9,58% | $MgO$ |
| 14,58% | $Al_2O_3$ |
| 4,10% | $SiO_3$ |
| 0,002% | $SO_3$ |
| 0,023% | $P_2O_5$ |

Rest oxidische Verunreinigungen und Alkalien und für Ferromangan indisches Manganerz mit

| 78 bis 85% | $MnO_2$ |
|---|---|
| 2 bis 4% | $Fe$ |
| bis 6% | $Mn_3O_4$ |
| 1 bis 4% | $SiO_2$ |
| 1 bis 5% | $Al_2O_3$ |
| und bis 0,2% | $P$ |

eingesetzt werden.

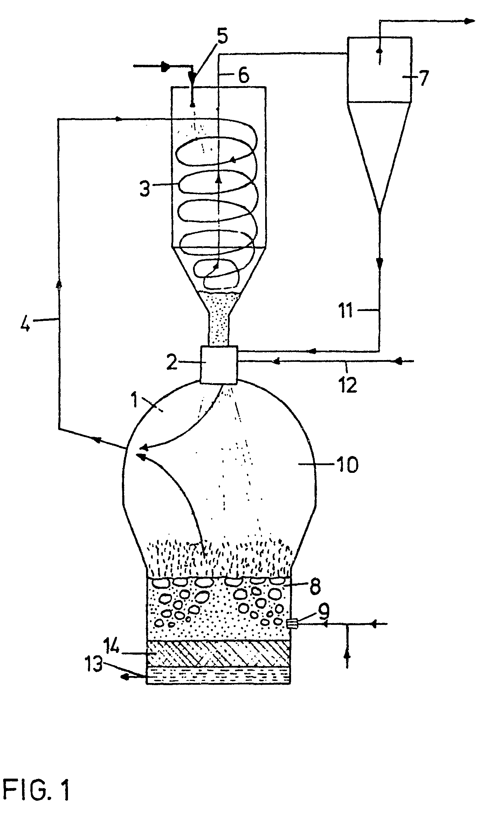

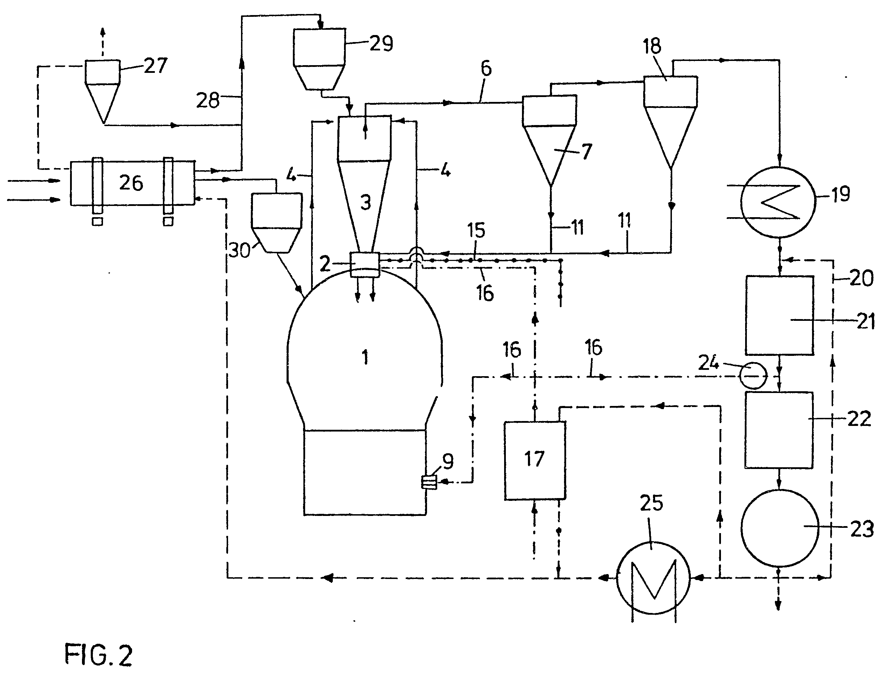

Das erfindungsgemässe Verfahren wird nachfolgend anhand von in der Zeichnung dargestellten Ausführungsbeispielen von für die Durchführung des Verfahrens besonders geeigneten Einrichtungen und anhand eines Ausführungsbeispieles unter Berücksichtigung der Wärmebilanz näher erläutert. Es zeigen Fig. 1 eine schematische Darstellung der Kombination eines Schmelzbrennverfahrens mit einem Einschmelzvergaser und Fig. 2 eine erweiterte Anlage zur Rückgewinnung von elementarem Schwefel.

In Fig. 1 ist am Kopf eines Einschmelzvergasers 1 in der senkrechten Ofenachse ein Schmelzbrenner 2 angeordnet. Das Konzentrat wird über einen geschlossenen Aufgabebunker 3 zugeführt, in welchem es durch die über die Leitung 4 zugeführten heissen Reaktorabgase vorgewärmt wird. Die Konzentrataufgabe ist mit 5 bezeichnet. Die heissen Reaktionsgase des Einschmelzvergasers 1 werden tangential in den Aufgabenbunker 3 eingeleitet und nach dem Durchströmen des Aufgabebunkers und gleichzeitiger Erwärmung des zu verbrennenden Materials über ein Tauchrohr 6 abgezogen und einem Heissgaszyklon 7 zugeführt. Die vorgewärmten Ausgangsmaterialien werden im Zündraum des Schmelzbrenners 2 unter tangential einströmendem Sauerstoff bzw. Sauerstoff-Heissluft-Gemisch suspendiert und gezündet. Bei der Verbrennung entstehen entsprechend hohe Temperaturen, so dass sich aus dem Konzentrat sehr bald kleine Schmelztröpfchen bilden, welche zusammen mit der $SO_2$-Flamme auf die Oberfläche einer Kohlenstoffwirbelschicht auftreffen. Die Kohle wird hiebei gesondert, vorzugsweise kontinuierlich, chargiert.

Das Kohlewirbelbett 8, dessen Temperatur über den Wärmeinhalt der bei den Düsen 9 eingeblasenen Heissluft bzw. des Heissluft-Sauerstoff-Gemisches gesteuert werden kann, hat die Aufgabe, $Cu_2O$ und $Fe_3O_4$ zu Cu und FeO zu reduzieren, die Kohle zu entgasen, die Schmelzprodukte auf die gewünschte Endtemperatur zu bringen, einen Teil des $SO_2$ zu Schwefel zu reduzieren und das aus dem Wirbelbett austretende stickstoff- und CO-hältige Gas auf etwa 1400 °C aufzuheizen. Alle diese physikalischen und chemischen Prozesse haben abgesehen von der $SO_2$ Reduktion einen relativ geringen Wärmebedarf, so dass dafür der Brennstoffverbrauch nicht allzu gross ist. Der Grossteil der Kohle wird für die Reduktion des $SO_2$ verwendet. Im Raum über dem Wirbelbett, dem Beruhigungsraum 10, in welchem die austretenden Gasblasen fontänenartig zerplatzen, wird die vom Einschmelzbrenner kommende $SO_2$-Schmelzproduktsuspension durch das gegenströmende CO bzw. Stickstoffgas abgebremst, aufgeheizt und reduziert. Dabei kommt es zu einer optimalen Vermischung zwischen den Gasen und festem Kohlenstaub, während die Schmelztröpfchen nur unwesentlich gebremst werden und in die Wirbelschicht eintauchen. Im Beruhigungsraum 10 und in den Gasabzügen soll der Grossteil des anfallenden $SO_2$ durch das CO und den Kohlenstoff des aus dem Wirbelbett mitgerissenen Koksstaubes reduziert werden. Die Gastemperaturen, welche im Mittel bei ungefähr 1300 °C liegen, reichen dazu aus, wobei die Reduktionskraft des Gases über die im Wirbelbett verbrannte Feinkoksmenge gesteuert werden kann. Eine Umsetzung von $SO_2$ mit dem Kohlenstoff in den Gasabzügen vermindert die C-Verluste im mitgerissenen Staub wesentlich und führt gleichzeitig wegen des endothermen Reaktionsablaufes zu einer Absenkung der Gastemperatur.

Die fühlbare Wärme des entstehenden Reaktionsgases nach diesen Umsetzungen wird zur Vorwärmung des Konzentrates verwendet.

In der Heissgaszyklonabgasreinigungsstufe werden die mitgerissenen Feststoffe abgeschieden und können als Staub über eine Leitung 11 dem Schmelzbrenner zugeführt werden. Die Heissluft- bzw. Sauerstoffzuleitung zum Schmelzbrenner ist mit 12 bezeichnet.

Am unteren Teil des Einschmelzvergasers kann Blister oder Matte und die Schlacke 14 über eine Abstichöffnung 13 abgezogen werden.

Bei diesem Verfahren ändert sich die Gaszusammensetzung laufend aufgrund unterschiedlicher Reaktionsbedingungen und zwar im besonderen aufgrund der Umsetzung in der Wirbelschicht von $SO_2$ mit C zu CO und $S_2$. Im Raum oberhalb der Wirbelschicht entsteht in erster Linie eine Gasatmosphäre aus Schwefel, Kohlenmonoxid, Wasserstoff, Kohlenstoff in Staubform suspendiert, $SO_2$ und Stickstoff. Die totale Umsetzung des restlichen Schwefeldioxids mit Kohlenmonoxid, Wasserstoff und Kohlenstoff in den Gasabzügen führt zu einem Gas, welches Schwefel, Kohlenmonoxid, Wasserstoff und Stickstoff enthält. Je stärker sich das Gas abkühlt, umso eher wird es zur Bildung von $H_2S$, COS und $CS_2$ kommen. Die Gewinnung von elementarem Schwefel aus diesen Verbindungen ist Stand der Technik. Nach der Schwefelabscheidung enthält das Abgas in erster Linie CO, $H_2$ und $N_2$, neben geringen Anteilen an $CO_2$. Dieses Abgas hat somit einen hohen Heizwert und kann z.B. für die Luftvorwärmung bzw. als hochwertiger Energieträger weiterverwendet werden.

Im besonderen hat die Kombination des Suspensionsschmelzverfahrens, welches auch als Flash-Smelting in den Stand der Technik Eingang gefunden hat und des Kohlewirbelbettschmelzens den Vorteil der Zusammenfassung eines oxidierenden und eines reduzierenden Prozesses in einem Aggregat bei gleichzeitiger Gewinnung von energiereichem Gas, wobei für den speziellen Fall der Kupfererzeugung sich als Vorteil die Tatsache auswirkt, dass die ganze Produktpalette von der Matte bis zum Blisterkupfer produziert werden kann, ohne dass dadurch höhere Kupferverluste in der Schlacke zu befürchten sind. Die Energiezufuhr lässt sich sowohl über den Schmelzbrenner als auch über die Luftdüsen unterhalb des Kohlewirbelbettes steuern, wodurch der Einfluss der Konzentratqualität auf den Ablauf des Prozesses gering wird. An Regelgrössen bzw. Steuerparametern stehen der Sauerstoffzusatz, die Heisslufttemperatur und -menge, die Fliessbetthöhe, der Mattegrad und der Brennstoffverbrauch zur Verfügung, so dass in Bezug auf die Rohstoffqualität sowohl bei Konzentraten als auch bei Kohlen keine besonders hohen Massstäbe angesetzt werden müssen. Es ist weiters möglich, unerwünschte Begleitelemente, wie z.B. Blei, Zink, Antimon od.dgl. aufgrund der hohen Reaktionstemperaturen zu verdampfen und aus der Gasphase abzutrennen.

Die gleichzeitige Gewinnung von elementarem Schwefel, hochwertiger Matte bzw. Blisterkupfer und eines energiereichen Gases bei Einsatz von minderwertigen Steinkohlen führt hiebei zu einer starken Verbilligung der Produktionskosten.

Bei der in Fig. 2 dargestellten Anlage wird der zusätzliche apparative Aufwand für die Gewinnung von elementarem Schwefel näher erläutert. Der Einschmelzvergaser wird wiederum mit 1 bezeichnet und koaxial zu diesem befindet sich wieder der Schmelzbrenner 2. Der Aufgabebunker ist wiederum mit 3 bezeichnet, wobei hier dem Schmelzbrenner 2 Sauerstoff und Luft über gesonderte Leitungen 15 und 16 zugeführt wird. Die Luft wird hiebei in einer Vorwärmstufe 17 unter Verwendung der Abgasenergie vorgewärmt. Das aus dem Vorwärmbunker 3 abgezogene Gas gelangt über die Leitung 6 in einen ersten Heisszyklon 7, in welchem die Feststoffe abgetrennt und über die Leitung 11 zum Schmelzbrenner 2 rückgeführt werden. Zusätzlich ist hier ein zweiter Heisszyklon 18 vorgesehen, und das diesen zweiten Heisszyklon verlassende Gas wird über einen Wärmetauscher 19 geführt, um Prozessabwärme rückzugewinnen. In der Folge wird Kühlgas über eine Leitung 20 zugeführt und in einer Kondensationseinrichtung 21 der Schwefel kondensiert. Der Kondensationskammer 21 ist eine Clausanlage 22 nachgeschaltet, welcher wiederum ein Gaswäscher 23 nachgeschaltet ist. In der Clausanlage 22 wird Schwefelwasserstoff oxidativ zu Schwefel umgesetzt, wobei zu diesem Zweck eine Verbrennungskammer 24 vorgeschaltet ist. Die Reaktion im Clausofen lässt sich wie folgt darstellen: $SO_2 + 2 H_2S \rightarrow 3 S + 2 H_2O$. Sowohl der Verbrennungskammer 24 als auch den Düsen 9 des Einschmelzvergasers 1 als auch dem Schmelzbrenner 2 wird heisse Luft über Leitungen 16 zugeführt, wobei die Vorwärmung in die Vorwärmeeinrichtung 17 erfolgt. In den Abgasstrom ist noch ein weiterer Wärmetauscher bzw. Abhitzekessel 25 eingeschaltet und das verbleibende Abgas kann in einer Feststofftrocknungsstufe 26 zur Trocknung des Einsatzgutes herangezogen werden. Das diese Trocknungsstufe 26 verlassende Gas wird wiederum über einen Staubabscheider 27 geführt, wobei der abgeschiedene Feststoffanteil über eine Leitung 28 dem Konzentratbunker 29 aufgegeben wird. Die Kohle wird hiebei gesondert, vorzugsweise kontinuierlich, aus einem Kohlebunker 30 chargiert.

Die Erfindung wird nachfolgend anhand eines Ausführungsbeispieles weiter erläutert. Es wurde ein Kupferkonzentrat, welches sich aus 90% Kupferkies ($CuFeS_2$) und 10% Gangart ($SO_2$) zusammensetzt, eingesetzt. Das Konzentrat wurde getrocknet und auf 600 °C vorgewärmt. Als Endprodukt wurde ein Spurstein mit 80% Kupfer und 20% Schwefel und eine Schlacke mit 40% FeO erzeugt. Die Kohleanalyse der Einsatzkohle lautete wie folgt:

| | | |
|---|---|---|
| $H_2O$ | = | 3% |
| Asche | = | 12% |
| F. Best. | = | 25% |
| $C_{fix}$ | = | 60% |
| O | = | 8,5% |
| H | = | 3,7% |
| N | = | 1,4% |
| S | = | 1,2% |
| $C_{ges.}$ | = | 85,2% |
| $H_u$ | = | 6000 kcal |
| | = | 25.100 kJ |

— Die Verstaubungsverluste an Kohle betrugen 20%.

— Der gesamte unvergaste Kohlenstoff setzte sich mit $SO_2$ um.

— Die Temperatur der flüssigen Produkte lag bei 1200 °C, die mittlere Fliessbett- sowie Gasaustrittstemperatur aus der Wirbelschicht bei 1400 °C. Die Temperatur des Gases nach dem Einschmelzvergaser betrug 1300 °C. — Als Verbrennungsmittel im Schmelzbrenner wurde reiner Sauerstoff verwendet. — Der Wirbelschichtkoks wurde mit Heissluft von 500 °C vergast.

Die Kohle wurde mit einer Korngrösse zwischen 3 und 25 mm eingesetzt, wobei durch Variation des Feinstkornanteiles die vollständige

Umsetzung des $SO_2$ sichergestellt wurde. Bei der nachfolgenden Energiebilanz wurde insofern idealisiert, als die endgültige Gaszusammensetzung mit CO, $H_2$, $N_2$ und $S_2$ angenommen wurde. Die Wärmebilanz wurde für die verschiedenen Stufen durchgerechnet und vor allem im einzelnen für das Schmelzen im Schmelzbrenner und $SO_2$-Teilreduktion an der Wirbelbettoberfläche, weiters die Wärmebilanz des Wirbelbettes, die Gasbilanz im Beruhigungsraum, die Gasbilanz nach Umsetzung des Kohlenstaubes und die Wärmebilanz für den Bereich Beruhigungsraum und Konzentratvorwärmung erstellt. Für diese Betrachtungsweise ergeben sich die nachfolgenden Werte.

Schmelzen im Brenner und $SO_2$-Teilreduktion im Wirbelbett

1000 kg Konzentrat besteht aus 900 kg Kupferkies und 100 kg Gangart.

Aus 900 kg Kupferkies entstehen 387 kg Spurstein ($Cu_2S$), 432 kg FeS und 81 kg S.

Für die Oxidation des FeS und $S_2$ werden 222 $Nm^3 O_2$ benötigt, dabei bilden sich 352 kg FeO und 167 $Nm^3$ $SO_2$. An Zuschlägen werden 428 kg eingesetzt, das ergibt eine Gesamtschlackenmenge von 880 kg.

Das restliche $SO_2$ wird sich aller Wahrscheinlichkeit nach mit dem Wasserstoff zu S und $H_2O$ umsetzen ($SO_2 + 2H_2 = 1 S + 2 H_2O$).

Die Restgaszusammensetzung lautet:

| | $S_2$ | CO | $H_2$ | $N_2$ | $H_2O$ |
|---|---|---|---|---|---|
| $Nm^3$ | 83,3 | 478,8 | 62,6 | 33,6 | 83,8 |

Nach Kondensation des Schwefels und des Wasserdampfes lautet die endgültige Gaszusammensetzung:

| | CO | $H_2$ | $N_2$ | |
|---|---|---|---|---|
| $Nm^3$ | 478,8 | 62,6 | 336 | 877,4 |
| % | 54,6 | 7,2 | 38,3 | |

Der Heizwert des Gases beträgt 1870 kcal/$Nm^3$ (= 7835 kJ). Das gesamte Restgas hat einen Wärmeinhalt von 1,600.000 kcal (= 6,700.000 kJ).

Pro 1000 kg Konzentrat werden im behandelten Fall

| | |
|---|---|
| 317 kg | Kohle ($H_u$ = 6000 kcal = 25.100 kJ) |
| 430 kg | Zuschläge |
| 222 | $Nm^3 O_2$ |
| 426 | $Nm^3$ Heissluft |

benötigt.

Die Gesamtenergiebilanz sieht folgendermassen aus:

| Wärmeeinnahmen: | kcal | kJ |
|---|---|---|
| Luftvorwärmung | 64.800 | 271.500 |
| 317 kg Kohle $H_u$ | 1,902.000 | 7,969.400 |
| = 6000 kcal | | |
| = 25.100 kJ | | |
| 1000 kg Konzentrat | 1,003.200 | 4,203.400 |
| Gesamt | 2,970.000 | 12,444.300 |
| Wärmeausgaben: | | |
| Fühlbare Wärme Stein | 67.800 | 284.100 |
| Fühlbare Wärme Schlacke | 288.600 | 1,209.200 |
| Fühlbare Wärme Gas | 215.800 | 904.200 |
| Chemische Wärme Gas | 1,600.000 | 6,704.000 |
| Chemische Wärme im elementaren Schwefel | 524.000 | 2,197.700 |
| Verluste | 273.300 | 1,145.100 |
| Gesamt | 2,970.000 | 12,444.300 |

Einem Energieeintrag von 7,96 GJ an fossiler Energie steht ein Output an hochwertiger Gaswärme von 1,6 Gcal = 6,7 GJ gegenüber, so dass der eigentliche Energieaufwand pro Tonne Konzentrat ca. 300.000 kcal (= 1,257.000 kJ) beträgt.

Dies würde bedeuten, dass auf die Tonne Cu-Metall gerechnet ca. 1 Gcal (= 4,2 GJ) an Brennstoff benötigt wird. Rechnet man den Bedarf für die Sauerstofferzeugung dazu, so werden weitere 400.000 kcal (= 1,676.000 kJ) gebraucht, so dass der Gesamtenergieverbrauch pro Tonne Rohrkupfer zwischen 5 bis 6 GJ liegt.

**Patentansprüche**

1. Verfahren zum Erschmelzen von Metallen aus oxidischen und/oder feinkörnigen sulfidischen Nichteisenmetallerzen bzw. -konzentraten, insbesondere sulfidischen Buntmetallerzen bzw. -konzentraten, bei welchem sulfidische Erze unter Luft bzw. Sauerstoffzufuhr oxidiert werden, dadurch gekennzeichnet, dass die Erze bzw. Konzentrate in stückiger und/oder körniger Form in einem Einschmelzvergaser (1) in eine Kohlewirbelschicht (8) eingebracht und dort geschmolzen werden, und dass bei Einsatz von sulfidischen Erzen diese vor dem Einbringen in die Kohlewirbelschicht (8) des Einschmelzvergasers (1) einem Schmelzbrenner (2) zugeführt werden, wobei der Flammstrahl des Schmelzbrenners (2) auf die Kohlewirbelschicht (8) gerichtet wird und die Schmelzprodukte unterhalb des Kohlebettes abgezogen werden.

2. Verfahren nach Anspruch 1, dadurch gekennzeichnet, dass die Korngrösse der aufzubringenden Erze bzw. Konzentrate zwischen 1 mm und 50 mm, vorzugsweise 3–30 mm, gewählt wird.

3. Verfahren nach Anspruch 1 oder 2, dadurch gekennzeichnet, dass die Korngrösse kohlenstoffhaltiger Partikel in der Wirbelschicht 1–50 mm, vorzugsweise 1–25 mm, gewählt wird.

4. Verfahren nach Anspruch 1, 2 oder 3, dadurch gekennzeichnet, dass die Erze vor der Aufgabe in die Kohlewirbelschicht (8) auf Temperaturen zwischen 500 °C und 900 °C vorgewärmt und erforderlichenfalls bei Temperaturen zwischen 700–900 °C geröstet werden.

5. Verfahren nach einem der Ansprüche 1 bis 4, dadurch gekennzeichnet, dass die Kohlewirbelschicht (8) auf Temperaturen zwischen 1200 °C und 1800 °C, vorzugsweise zwischen 1300 °C und 1700 °C, gehalten wird.

6. Verfahren nach einem der Ansprüche 1 bis 5, dadurch gekennzeichnet, dass das aus dem Einschmelzvergaser (1) abgezogene Reduktionsgas zur Vorreduktion und Aufwärmung der Rohstoffe herangezogen wird.

7. Verfahren nach einem der Ansprüche 1 bis 6, dadurch gekennzeichnet, dass die Temperatur des Kohlewirbelbettes durch Einblasen von Heissluft und/oder Sauerstoff geregelt wird.

8. Verfahren nach einem der Ansprüche 1 bis 7, dadurch gekennzeichnet, dass die Reaktionsgase des Einschmelzvergasers (1) in einem Heisszyklon (7, 18) gereinigt werden.

9. Verfahren nach einem der Ansprüche 1 bis 8, dadurch gekennzeichnet, dass den Reaktionsgasen des Einschmelzvergasers (1) Röstgase zugesetzt werden und gegebenenfalls erhaltenes $SO_2$ zu S reduziert wird.

10. Verfahren nach Anspruch 1, dadurch gekennzeichnet, dass die aus dem Einschmelzvergaser (1) austretenden heissen Reaktionsgase oberhalb der Kohlewirbelschicht (8) abgezogen zur Vorwärmung der dem Schmelzbrenner (2) zuzuführenden Ausgangsmaterialien herangezogen werden.

11. Verfahren nach einem der Ansprüche 1 bis 10, dadurch gekennzeichnet, dass die Temperatur des Kohlewirbelbettes durch Einstellung der Heisslufttemperatur und die Reduktionsgasmenge über die Heissluftmenge, Luft-Sauerstoffmenge und Kohlezugabe gesteuert wird.

12. Verfahren nach einem der Ansprüche 1, 10 oder 11, dadurch gekennzeichnet, dass die Temperatur des Kohlewirbelbettes zwischen 1200 °C und 1600 °C, vorzugsweise etwa 1400 °C, gehalten wird.

13. Verfahren nach einem der Ansprüche 1, 10, 11 oder 12, dadurch gekennzeichnet, dass die im Einschmelzvergaser (1) gebildete Reduktionsgasmenge und -temperatur so geregelt wird, dass eine vollständige Reduktion des im Schmelzbrenner (2) entstehenden $SO_2$ zu S sichergestellt ist und dass der Schwefel aus der Gasphase, insbesondere durch Kondensieren, abgetrennt wird.

14. Verfahren nach einem der Ansprüche 1 bis 13, dadurch gekennzeichnet, dass mit den sauerstoffhaltigen Gasen Kohlenstoffträger eingeblasen werden.

15. Verfahren nach einem der Ansprüche 1 bis 14, dadurch gekennzeichnet, dass mit den Kohlenstoffträgern vorgewärmte sauerstoffhaltige Gase eingeblasen werden.

16. Verfahren nach einem der Ansprüche 1 bis 15, dadurch gekennzeichnet, dass den Nichteisenmetallerzen Eisenerze zum unmittelbaren Erschmelzen von Ferrolegierungen wie z.B. Ferrochrom oder Ferromangan zugesetzt werden.

17. Einrichtung zur Durchführung des Verfahrens nach einem der Ansprüche 1, oder 10 bis 16 mit einem Einschmelzvergaser (1), einem Schmelzbrenner (2), sowie einer Aufgabeeinrichtung (3) und einer Abstichöffnung (13), dadurch gekennzeichnet, dass der Schmelzbrenner (2) unmittelbar an den Kopf eines Einschmelzvergasers (1) angeschlossen ist und dass an den Einschmelzvergaser (1) Leitungen (4, 9) für die Zugabe von Kohlenstoffpartikeln und sauerstoffhaltigen Gasen für das Fliessbett sowie für den Abzug von Reaktionsgasen angeschlossen sind, dass der Schmelzbrenner (2) im unteren Teil eines gasdichten Gehäuses angeordnet ist, an welches die Leitung (4) für den Abzug der Reaktionsgase aus dem Einschmelzvergaser (1), und eine zu einer Gasreinigungseinrichtung (7, 18) führende Leitung (6) angeschlossen ist, und dass an die Gasreinigungsvorrichtung (7, 18) eine Leitung (11) zum Abziehen von Feststoffen angeschlossen ist, welche mit dem Schmelzbrenner (2) verbunden ist.

18. Einrichtung nach Anspruch 17, dadurch gekennzeichnet, dass die Leitung (4) für den Abzug der Reaktionsgase aus dem Einschmelzvergaser (1), mit im wesentlichen tangentialer Mündung zum Inneren des Gehäuses (3) angeordnet ist.

## Revendications

1. Procédé de fusion de métaux à partir de minerais ou de concentrés non ferreux de type oxydes et/ou sulfures à grain fin, notamment de minerais ou de concentrés sulfurés non ferreux, selon lequel des minerais sulfurés sont oxydés par injection d'air ou d'oxygène, caractérisé en ce que les minerais ou les concentrés sont introduits en morceaux ou sous forme particulaire dans un lit fluidisé de charbon (8) contenu dans un appareil de fusion par gazéification (1) pour y être fondu, et que lors de la mise en œuvre des minerais sulfurés, ceux-ci sont introduits dans un brûleur de fusion (2) avant l'entrée dans le lit fluidisé de charbon (8) de l'appareil de fusion par gazéification (1), la flamme du brûleur de fusion (2) étant dirigée sur le lit fluidisé de charbon (8) tandis que les substances fondues sont évacuées au-dessous du lit de charbon.

2. Procédé selon la revendication 1, caractérisé en ce que la granulométrie des minerais ou des concentrés à introduire est choisie entre 1 mm et 50 mm, de préférence 3–39 mm.

3. Procédé selon les revendications 1 ou 2, caractérisé en ce que la granulométrie des particules contenant du carbone dans le lit fluidisé est choisie de 1 à 50 mm, de préférence de 1 à 25 mm.

4. Procédé selon les revendications 1, 2 ou 3, caractérisé en ce que, avant leur introduction dans le lit de charbon fluidisé, les minerais sont préchauffés à des températures entre 500 °C et 900 °C et, si nécessaire, sont grillés à des températures entre 700 et 900 °C.

5. Procédé selon l'une des revendications 1 à 4, caractérisé en ce que le lit de charbon fluidisé (8), est maintenu à des températures entre 1200 °C et 1800 °C, de préférence entre 1300 °C et 1700 °C.

6. Procédé selon l'une des revendications 1 à 5, caractérisé en ce que le gaz réducteur provenant de l'appareil de fusion par gazéification (1), est prélevé pour la préréduction et le chauffage des matières premières.

7. Procédé selon l'une des revendications 1 à 6, caractérisé en ce que la température du lit de charbon fluidisé est réglée par insufflation d'air chaud et/ou d'oxygène.

8. Procédé selon l'une des revendications 1 à 7, caractérisé en ce que les gaz de réaction de l'appareil de fusion par gazéification (1) sont épurés dans un cyclone chaud (7, 18).

9. Procédé selon l'une des revendications 1 à 8, caractérisé en ce que des gaz de grillage sont ajoutés dans le lit de charbon fluidisé, aux gaz de réaction de l'appareil de fusion par gazéification (1) et que le cas échéant, le $SO_2$ obtenu est réduit en S.

10. Procédé selon la revendication 1, caractérisé en ce que les gaz de réaction chauds, sortant de l'appareil de fusion par gazéification (1), sont prélevés au-dessus de la couche de charbon fluidisé (8) pour préchauffer les matières premières à introduire dans le brûleur de fusion (2).

11. Procédé selon l'une des revendications 1 à 10, caractérisé en ce que la température du lit de charbon fluidisé est comandée par réglage de la température de l'air chaud et la quantité de gaz réducteurs par le débit d'air chaud, le débit d'oxygène et d'air et la quantité de charbon ajoutée.

12. Procédé selon l'une des revendications 1, 10 ou 11, caractérisé en ce que le lit de charbon fluidisé est maintenu à une température entre 1200 °C et 1600 °C, de préférence à 1400 °C environ.

13. Procédé selon l'une des revendications 1, 10, 11 ou 12, caractérisé en ce que la quantité et la température des gaz réducteurs formés dans l'appareil de fusion par gazéification (1), sont réglées de manière à assurer une réduction complète en S du $SO_2$ formé dans le brûleur de fusion (2) et que le soufre provenant de la phase gazeuse est séparé, notamment par condensation.

14. Procédé selon l'une des revendications 1 à 13, caractérisé en ce que des porteurs de carbone sont injectés ensemble avec des gaz contenant de l'oxygène.

15. Procédé selon l'une des revendications 1 à 14, caractérisé en ce que des gaz préchauffés contenant de l'oxygène sont injectés avec les porteurs de carbone.

16. Procédé selon l'une des revendications 1 à 15, caractérisé en ce qu'on ajoute des minerais de fer aux minerais non ferreux pour la fusion directe de ferro-alliages tels que du ferrochrome ou du ferromanganèse.

17. Dispositif pour la mise en œuvre du procédé selon l'une des revendications 1, ou 10 à 16 comprenant un appareil de fusion par gazéification, un brûleur de fusion (2), ainsi qu'un dispositif d'alimentation (3) et un orifice de coulée (13), caractérisé en ce que le brûleur de fusion (2) est raccordé directement à la tête d'un appareil de fusion par gazéification (1) et que des conduites (4, 9) pour l'addition de particules de carbone et de gaz contenant de l'oxygène au lit fluidisé ainsi que pour l'évacuation des gaz de réaction sont raccordées à l'appareil de fusion par gazéification (1) et que le brûleur de fusion (2) est disposé dans la partie inférieure d'une enceinte étanche aux gaz à laquelle sont raccordées une conduite (4) pour l'évacuation des gaz de réaction provenant de l'appareil de fusion par gazéification (1) et une conduite (6) allant vers un dispositif d'épuration des gaz (7, 18), et qu'une conduite (11) pour l'évacuation des substances solides, qui est reliée au brûleur de fusion (2), est raccordée au dispositif d'épuration des gaz (7, 18).

18. Dispositif selon la revendication 17, caractérisé en ce que la conduite (4) pour l'évacuation des gaz de réaction provenant de l'appareil de fusion par gazéification (1) débouche de manière sensiblement tangentielle à l'intérieur de l'enceinte (3).

## Claims

1. A process for the smelting of metals from oxidic and/or fine-grained sulphidic non-ferrous metal ores and/or concentrates, inparticular sulphidic non-ferrous metal ores and/or concentrates, in which sulphidic ores are oxidised with the addition of air or oxygen, characterised in that the ores and/or concentrates are introduced in the form of lumps and/or in granular form into a carbon fluidised bed (8) in a smelting gasifier (1) and are smelted therein, and in that when using sulphidic ores, before their introduction into the carbon fluidised bed (8) of the smelting gasifier (1), they are fed to a smelting burner (2), wherein the flame jet of the smelting burner (2) is directed towards the carbon fluidised bed (8) and the smelting products are removed below the carbon bed.

2. A process according to Claim 1, characterised in that the grain size of the ores and/or concentrates to be introduced is chosen between 1 mm and 50 mm, preferably 3–30 mm.

3. A process according to Claim 1 or 2, characterised in that the grain size of the carbon-containing particles in the fluidised bed is chosen between 1 mm and 50 mm, preferably 1–25 mm.

4. A process according to Claim 1, 2 or 3, characterised in that, before being fed into the carbon fluidised bed (8), the ores are preheated to temperatures of between 500 °C and 900 °C and, if necessary, are roasted at temperatures of between 700 °C and 900 °C.

5. A process according to any one of Claims 1 to 4, characterised in that the carbon fluidised bed (8) is maintained at temperatures of between 1200 °C and 1800 °C, preferably between 1300 °C and 1700 °C.

6. A process according to any one of Claims 1 to 5, characterised in that the reducing gas removed from the smelting gasifier (1) is used for the prereduction and heating of the raw materials.

7. A process according to any one of Claims 1 to 6, characterised in that the temperature of the carbon fluidised bed is regulated by injecting hot air and/or oxygen.

8. A process according to any one of Claims 1 to 7, characterised in that the reaction gases of the smelting gasifier (1) are purified in a hot cyclone (7, 18).

9. A process according to any one of Claims 1 to 8, characterised in that roasting gases are added to the reaction gases of the smelting gasifier (1) and, optionally, any $SO_2$ obtained is reduced to S.

10. A process according to Claim 1, characterised in that the hot reaction gases emerging from the smelting gasifier (1) and removed above the carbon fluidised bed (8) are used to preheat the starting materials to be fed to the smelting burner (2).

11. A process according to any one of Claims 1 to 10, characterised in that the temperature of the carbon fluidised bed is controlled by adjusting the hot-air temperature and the quantity of reducing gas is controlled by the quantity of hot air, the air-oxygen quantity and the addition of carbon.

12. A process according to anyone of Claims 1, 10 or 11, characterised in that the temperature of the carbon fluidised bed is maintained between 1200 °C and 1600 °C, preferably at about 1400 °C.

13. A process according to any one of Claims 1, 10, 11 or 12, characterised in that the quantity and temperature of the reducing gas formed in the smelting gasifier (1) is regulated in such a way as to ensure complete reduction of the $SO_2$ produced in the smelting burner (2) to S, and in that the sulphur is separated from the gaseous phase, in particular by condensing.

14. A process according to any one of Claims 1 to 13, characterised in that carbon carriers are injected with the gases containing oxygen.

15. A process according to any one of Claims 1 to 14, characterised in that preheated oxygen-containing gases are injected with the carbon carriers.

16. A process according to any one of Claims 1 to 15, characterised in that iron ores are added to the non-ferrous metal ores for the direct smelting of ferrous alloys, for example ferrochromium or ferromanganese.

17. An apparatus for carrying out the process according to any one of Claims 1, or 10 to 16 with a smelting gasifier (1), a smelting burner (2), a feed device (3) and a tap hole (13), characterised in that the smelting burner (2) is connected directly to the head of a smelting gasifier (1) and in that ducts (4, 9) are connected to the smelting gasifier (1) for the addition of carbon particles and oxygen-containing gases for the fluidised bed and also for the removal of reaction gases, in that the smelting burner (2) is disposed in the lower part of a gas-tight housing, to which both the duct (4) for the removal of the reaction gases from the smelting gasifier (1) and a duct (6) leading to the gas-purifying device (7, 18) are connected, and in that a duct (11) is connected to the gas-purifying device (7, 18) for the removal of solids and is connected to the smelting burner (2).

18. A process according to Claim 17, characterised in that the mouth of the duct (4) for the removal of reaction gases from the smelting gasifier (1) is disposed substantially tangentially to the interior of the housing (3).

1/2

FIG. 1

FIG. 2